(19) Europäisches Patentamt
European Patent Office
Office européen des brevets

(11) **EP 2 104 258 A2**

(12) **EUROPEAN PATENT APPLICATION**

(43) Date of publication:
**23.09.2009 Bulletin 2009/39**

(51) Int Cl.:
*H04L 1/00* (2006.01)     *H04L 5/00* (2006.01)
*H04L 1/08* (2006.01)

(21) Application number: **09154925.3**

(22) Date of filing: **11.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.03.2008 JP 2008070167**

(71) Applicant: **Fujitsu Ltd.**
**Kawasaki-shi, Kanagawa 211-8588 (JP)**

(72) Inventors:
• **Shiizaki, Kotaro**
  **Kawasaki-shi, Kanagawa 211-8588 (JP)**
• **Kawabata, Kazuo**
  **Kawasaki-shi Kanagawa 211-8588 (JP)**
• **Seki, Hiroyuki**
  **Kawasaki-shi Kanagawa 211-8588 (JP)**

(74) Representative: **Fenlon, Christine Lesley**
  **Haseltine Lake LLP**
  **Lincoln House, 5th Floor**
  **300 High Holborn**
  **London WC1V 7JH (GB)**

(54) **Wireless communication apparatus, wireless transmission method and wireless reception method for encoding segmented data**

(57)    A wireless communication apparatus that transmits a wireless signal, the wireless communication apparatus including a dividing unit that divides data transmitted in a data area of a frame format of the wireless signal into a plurality of segments. The wireless communication apparatus includes an encoding unit that encodes the data segmented by the dividing unit segment by segment.

## FIG. 1

**Description**

BACKGROUND

Field

The present invention relates to a wireless communication apparatus that transmits a wireless signal and a wireless communication apparatus that receives a wireless signal.

Description of the Related Art

In wireless communication, a transmission frame format consisted of a plurality of blocks is generally used. For example, one frame of the transmission frame format includes an RS (Reference Signal), control information, a CRC (Cyclic Redundancy Check) of the control information, data, and a CRC of the data.

The improvement of the channel estimation accuracy remains a problem in wireless communication. The RSs are discretely arranged in the current 3GPP (3rd Generation Partnership Project). Therefore, the accuracy of the channel estimation of control information and data between RSs is improved by averaging the RSs or performing linear interpolation or other processes. However, even if such a method is used, the following capability is reduced when the channel fluctuation is fast, and the degradation of the channel estimation accuracy is inevitable.

Consequently, an estimation method of propagation characteristics of received signals is known, in which part of properly decoded control information or data is regarded equivalent to an RS to decode sequentially transmitted data (see, for example, Japanese Laid-Open Patent Publication No. 2003-115783).

For example, assuming that the control information is properly decoded in a certain frame, the control information can be regarded equivalent to the RS because the control information is known information. Therefore, the RS of the frame to be transmitted next and the known control information are used to artificially widen the width of the RS, thereby preventing the degradation of the channel estimation of data to be transmitted next.

However, in the conventional channel estimation method, if there is an error in decoding of the previous control information or the like, the control information or the like may not be artificially used as the RS. Therefore, the method may not function in a poor channel environment, and the throughput may be reduced.

It is desirable to provide a wireless communication apparatus capable of maintaining the throughput even in a poor channel environment.

SUMMARY

According to an aspect of the embodiments, a wireless communication apparatus transmits a wireless signal, the wireless communication apparatus including a dividing unit that divides data transmitted in a data area of a frame format of the wireless signal into a plurality of segments. The wireless communication apparatus includes an encoding unit that encodes the data segmented by the dividing unit segment by segment.

Advantages of the embodiments may be realized and attained by means of the elements and combinations particularly pointed out in the claims.

It is to be understood that both the foregoing general description and the following detailed description are exemplary and explanatory only and are not restrictive of the invention, as claimed.

BRIEF DESCRIPTION OF THE DRAWINGS

FIG. 1 is a diagram for explaining an overview of a wireless communication apparatus;
FIG. 2 is a diagram illustrating a configuration example of the wireless communication system according to a first embodiment;
FIG. 3 is a diagram illustrating an example of a frame format;
FIG. 4 is a diagram illustrating an example of a frame format in which the transmission rate is variable between segments;
FIG. 5 is a block diagram of a configuration of a wireless base station;
FIG. 6 is a diagram illustrating a data configuration example of rate instruction information;
FIG. 7 is a block diagram of a configuration of a mobile terminal;
FIG. 8 is a diagram illustrating an example of a frame format according to a second embodiment;
FIG. 9 is a block diagram of a configuration of the wireless base station;

FIG. 10 is a diagram illustrating a data configuration example of power instruction information;

FIG. 11 is a diagram for explaining a pseudo RS;

FIG. 12 is a diagram illustrating an example of a frame format according to a third embodiment;

FIG. 13 is a diagram illustrating FIG. 12 with time-frequency axes;

FIG. 14 is a diagram illustrating a data configuration example of rate instruction information;

FIG. 15 is a block diagram of a configuration of the mobile terminal;

FIG. 16 is a flow chart of a pseudo RS process of the mobile terminal;

FIG. 17 is a diagram illustrating an example of a frame format according to a fourth embodiment;

FIG. 18 is a diagram illustrating FIG. 17 with time-frequency axes;

FIG. 19 is a diagram illustrating a data configuration example of power instruction information;

FIG. 20 is a block diagram of a configuration of the wireless base station according to a fifth embodiment;

FIG. 21 is a diagram illustrating a data configuration example of division instruction information; and

FIG. 22 is a diagram illustrating the relationship between segments and transmission rate.

DESCRIPTION OF EMBODIMENTS

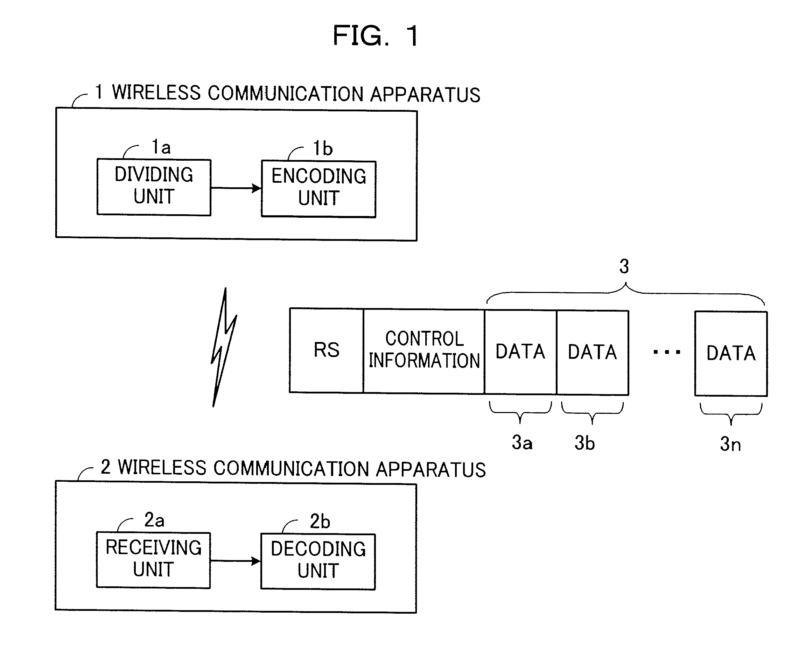

FIG. 1 is a diagram for explaining an overview of a wireless communication apparatus. A wireless communication apparatus 1 illustrated in FIG. 1 is a wireless communication apparatus on the data transmitting side. A wireless communication apparatus 2 is a wireless communication apparatus on the data receiving side. FIG. 1 depicts a frame format of a wireless signal transmitted from the wireless communication apparatus 1 to the wireless communication apparatus 2.

The wireless communication apparatus 1 includes dividing unit 1a and encoding unit 1b. The wireless communication apparatus 2 includes receiving unit 2a and decoding unit 2b.

The dividing unit 1a of the wireless communication apparatus 1 divides data transmitted in a data area 3 of the frame format of the wireless signal into a plurality of segments.

The encoding unit 1b encodes data 3a, 3b, ..., and 3n segmented by the dividing unit 1a, segment by segment. The receiving unit 2a of the wireless communication apparatus 2 receives the wireless signal in the frame format, in which data of the data area 3 is divided into a plurality of segments.

The decoding unit 2b decodes data 3a, 3b, ..., and 3n of the wireless signal received by the receiving unit 2a, segment by segment.

After segmenting and encoding the transmission data on the transmission side as described, the transmission rate of the data 3a, 3b, ..., and 3n can be varied segment by segment, for example. Specifically, the transmission rate of the data 3a of the segment near the RS can be set high, and the transmission rate of the data 3n of the segment far from the RS can be set low.

As a result, the data 3n of the segment at a location away from the RS can also be appropriately decoded on the receiving side even in a poor channel environment because the transmission rate is low.

In this way, segmenting and encoding of data enables maintaining throughput even in a poor channel environment.

A first embodiment will be described in detail with reference to the drawings.

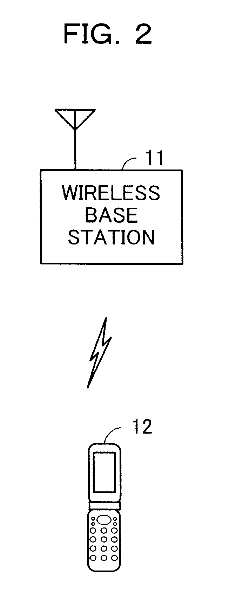

FIG. 2 is a diagram illustrating a configuration example of a wireless communication system according to the first embodiment. FIG. 2 illustrates a wireless base station 11 and a mobile terminal 12. The mobile terminal 12 is, for example, a cellular phone. The wireless base station 11 and the mobile terminal 12 can apply various communication systems, such as TDMA (Time Division Multiple Access), FDMA (Frequency Division Multiple Access), and CDMA (Code Division Multiple Access).

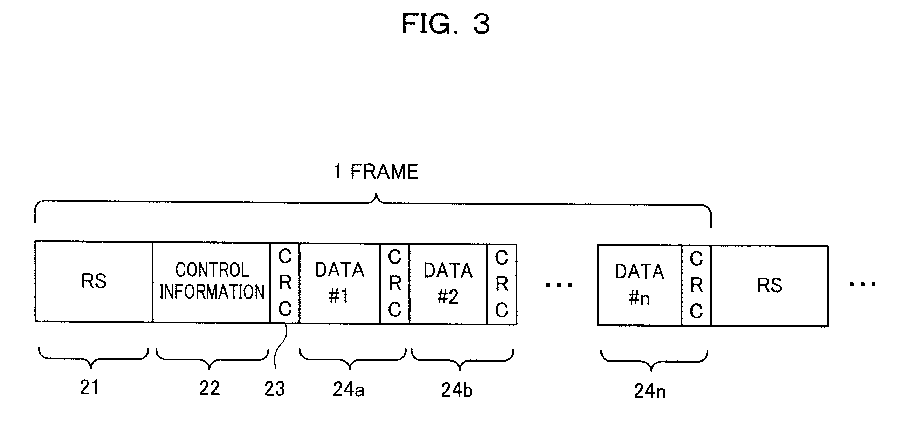

FIG. 3 is a diagram illustrating an example of a frame format. The wireless base station 11 and the mobile terminal 12 transmit and receive data based on the frame format illustrated in FIG. 3.

As illustrated in FIG. 3, an RS 21, control information 22, and a CRC 23 of the control information 22 are allocated to one frame. In a data area where data is allocated, one frame is divided into a plurality of segments 24a, 24b, ..., 24n, and the data encoded in the unit of segments 24a, 24b, ..., and 24n and the CRC of the data are allocated. The data allocated to the segments 24a, 24b, ..., and 24n is decoded in the unit of segments 24a, 24b, ..., and 24n.

The wireless base station 11 determines the transmission rate (modulation scheme and coding rate) of data transmitted in the unit of segments 24a, 24b, ..., and 24n according to the distance from the RS 21.

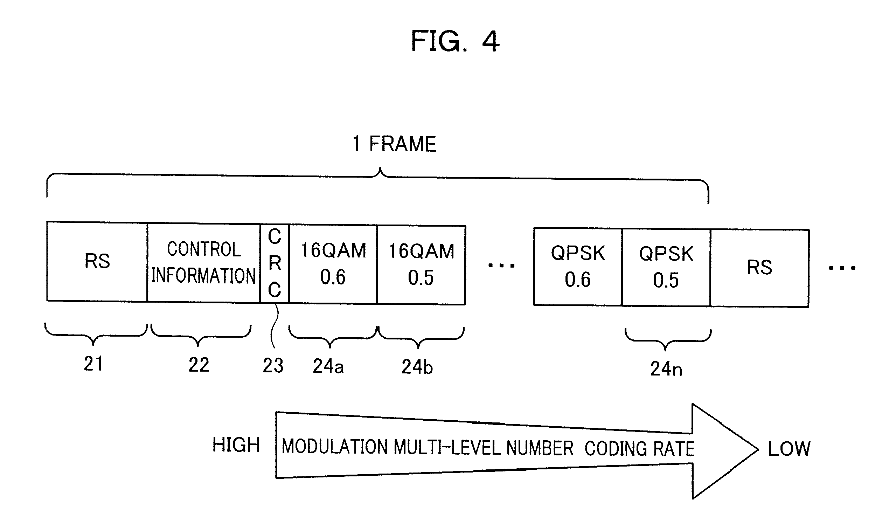

FIG. 4 is a diagram illustrating an example of a frame format in which the transmission rate is variable between segments. As illustrated in FIG. 4, the transmission rate of data is set high in the segment 24a near the RS 21. On the other hand, the transmission rate of data is set low in the segment 24n far from the RS 21.

In the segment 24a at a location near the RS 21, the difference between a channel estimation value obtained using the RS 21 and the actual channel estimation value in the segment 24a is small. Therefore, the decoding accuracy of data of the segment 24a is high, and data in high transmission rate (low redundancy) can be accurately decoded.

Meanwhile, in the segment 24n at a location far from the RS 21, the difference between a channel estimation value obtained using the RS 21 and the actual channel estimation value in the segment 24n is large. Therefore, the decoding accuracy of data of the segment 24n is low, and the data is transmitted and received in low transmission rate (high redundancy) to allow accurate decoding.

In the example of FIG. 4, the modulation scheme of the segment 24a at a location closest to the RS 21 is 16QAM (Quadrature Amplitude Modulation), and the coding rate is 0.6. The modulation scheme of the segment 24n at a location farthest from the RS 21 is QPSK (Quadrature Phase Shift Keying), and the coding rate is 0.5.

Making the transmission rate of the segments 24a, 24b, ..., 24n variable according to the distance from the RS 21 enables maintaining throughput even in a poor channel environment.

Although both of the modulation multi-level number and the coding rate are variable in Fig. 4, one of them may be fixed while only the other is variable. In FIG. 4, the CRC is not illustrated.

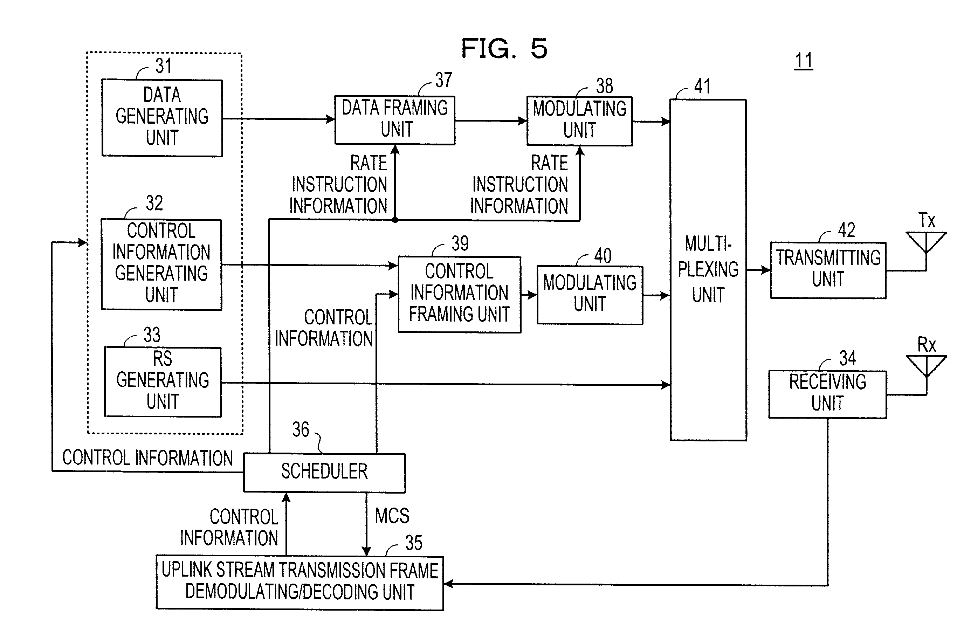

FIG. 5 is a block diagram of a configuration of the wireless base station 11. As illustrated in FIG. 5, the wireless base station 11 includes a data generating unit 31, a control information generating unit 32, an RS generating unit 33, a receiving unit 34, an uplink stream transmission frame demodulating/decoding unit 35, a scheduler 36, a data framing unit 37, modulating units 38 and 40, a control information framing unit 39, a multiplexing unit 41, and a transmitting unit 42.

The data generating unit 31 generates data to be transmitted to the mobile terminal 12. The control information generating unit 32 generates control information to be transmitted to the mobile terminal 12. The RS generating unit 33 generates an RS to be transmitted to the mobile terminal 12.

The receiving unit 34 receives a wireless signal wirelessly transmitted from the mobile terminal 12 through an antenna Rx.

An MCS (Modulation and Coding Scheme) is inputted to the uplink stream transmission frame demodulating/decoding unit 35 from the scheduler 36. The MCS is information including a modulation scheme and a coding rate of an uplink stream wireless signal transmitted by the mobile terminal 12. The uplink stream transmission frame demodulating/ decoding unit 35 demodulates and decodes an uplink stream wireless signal received by the receiving unit 34 based on the MCS informed from the scheduler 36.

The data received from the mobile terminal 12 includes control information. The control information includes information such as ACK/NACK (Acknowledgement/Negative Acknowledgement) information indicating a retransmission request of data and CQI (Channel Quality Indicator) information. The uplink stream transmission frame demodulating/ decoding unit 35 outputs the demodulated control information to the scheduler 36.

The scheduler 36 schedules downlink stream and uplink stream data. The scheduler 36 also determines the modulation scheme and the coding rate (MCS: Modulation and coding scheme) of the mobile terminal 12 when scheduling the uplink stream data and informs the modulation scheme and the coding rate to the uplink stream transmission frame demodulating/decoding unit 35. The scheduler 36 further outputs the uplink stream modulation scheme and the coding rate as control information to the control information framing unit 39 to inform the uplink stream modulation scheme and the coding rate to the mobile terminal 12.

The scheduler 36 determines rate instruction information of downlink stream data to be transmitted to the mobile terminal 12. The rate instruction information is information indicating the transmission rate of the segments 24a, 24b, ..., and 24n, and is information-such as the transmission rate of the segment 24a being 16QAM with a coding rate of 0.6, and the transmission rate of the segment 24b being 16QAM with a coding rate of 0.5.

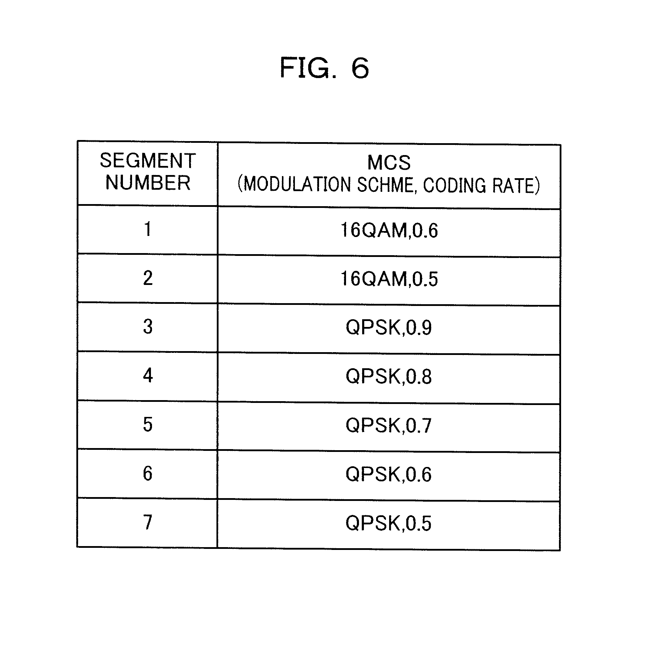

FIG. 6 is a diagram illustrating a data configuration example of the rate instruction information. As illustrated in FIG. 6, the rate instruction information includes a field of segment number and a field of MCS.

The segment number corresponds to, for example, the segments 24a, 24b, ..., and 24n illustrated in FIG. 4. The smaller the segment number, the closer is the corresponding segment to the RS 21, and the larger the number, the farther is the corresponding segment to the RS 21. Therefore, the smaller the segment number, the higher is the transmission rate, and the larger the segment number, the lower is the transmission rate.

The rate instruction information illustrated in FIG. 6 is stored in a storage device (storage unit)(not illustrated), and the scheduler 36 acquires the rate instruction information from the storage device. There are a plurality of patterns in the rate instruction information, and a plurality of pieces of information are stored in the storage device.

FIG. 5 will be further described. The scheduler 36 refers to the storage device based on CQI information of the control information outputted from the uplink stream transmission frame demodulating/decoding unit 35 to acquire predetermined rate instruction information from among the plurality of pieces of the rate instruction information. Specifically, the scheduler 36 determines the rate instruction information according to the wireless quality, such as fading variation. The scheduler 36 outputs the determined rate instruction information to the data framing unit 37 and the modulating unit 38. The scheduler 36 also informs the determined rate instruction information as control information to the control information framing unit 39 to inform the rate instruction information to the mobile terminal 12.

The scheduler 36 outputs the ACK/NACK information of the control information outputted from the uplink stream transmission frame demodulating/decoding unit 35 to the data generating unit 31, the control information generating unit 32, and the RS generating unit 33. The data generating unit 31, the control information generating unit 32, and the RS generating unit 33 generate retransmission data according to the ACK/NACK information.

When the uplink stream data is not appropriately received, the scheduler 36 outputs the control information of that fact to the control information framing unit 39 to request the mobile terminal 12 for retransmission.

The rate instruction information is inputted to the data framing unit 37 from the scheduler 36. The data framing unit 37 separates the data outputted from the data generating unit 31 into segments and encodes the data based on the segment numbers and the coding rates included in the rate instruction information. Examples of the encoding include Reed-Solomon encoding and turbo encoding.

The rate instruction information is inputted to the modulating unit 38 from the scheduler 36. The modulating unit 38 modulates the data outputted from the data framing unit 37 segment by segment based on the segment numbers and the coding rates included in the rate instruction information.

The control information framing unit 39 encodes the control information outputted from the control information generating unit 32 and the control information outputted from the scheduler 36. The modulating unit 40 modulates the control information outputted from the control information framing unit 39. Although the coding rate and the modulation scheme of the control information are generally fixed, the coding rate and the modulation scheme may be changed by an instruction from a higher-level apparatus, such as an RNC (Radio Network Control), of the wireless base station 11.

The multiplexing unit 41 multiplexes the data outputted from the modulating unit 38, the control information outputted from the modulating unit 40, and the RS outputted from the RS generating unit 33, and outputs them to the transmitting unit 42. The multiplexing unit 41 outputs a frame format, as illustrated in FIG. 4.

The transmitting unit 42 converts the data outputted from the multiplexing unit 41 to a wireless signal and wirelessly transmits the signal to the mobile terminal 12 through the antenna Tx.

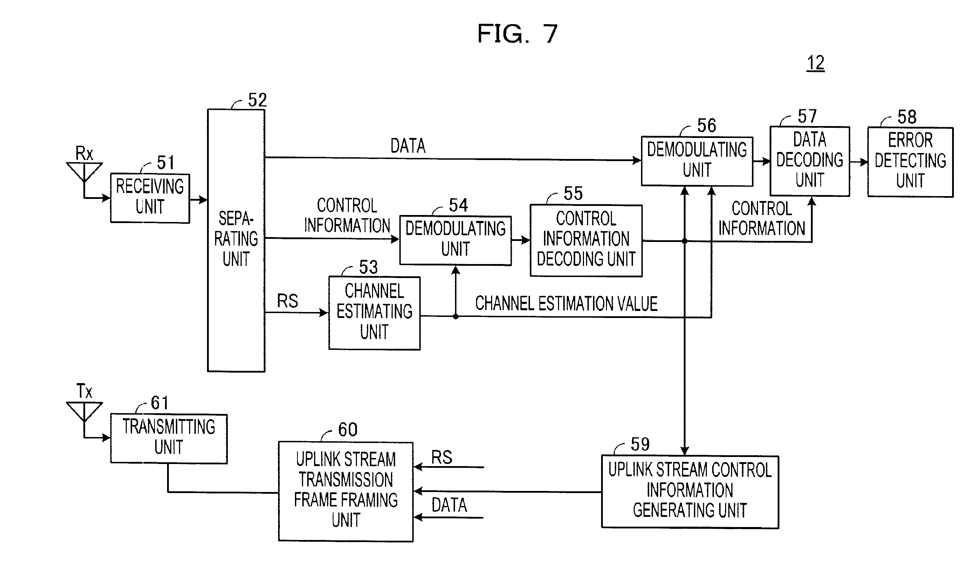

FIG. 7 is a block diagram of a configuration of the terminal 12. As illustrated in FIG. 7, the mobile terminal 12 includes a receiving unit 51, a separating unit 52, a channel estimating unit 53, demodulating units 54 and 56, a control information decoding unit 55, a data decoding unit 57, an error detecting unit 58, an uplink stream control information generating unit 59, an uplink stream transmission frame framing unit 60, and a transmitting unit 61.

The receiving unit 51 receives the wireless signal wirelessly transmitted from the wireless base station 11 through the antenna Rx.

The separating unit 52 separates the wireless signal received by the receiving unit 51 into an RS, control information, and data.

The channel estimating unit 53 calculates a channel estimation value based on the RS separated by the separating unit 52.

The demodulating unit 54 demodulates the control information based on the channel estimation value calculated by the channel estimating unit 53. The control information decoding unit 55 decodes the demodulated control information.

The demodulating unit 56 demodulates the data separated by the separating unit 52 based on the channel estimation value calculated by the channel estimating unit 53 and the control information decoded by the control information decoding unit 55. The control information includes rate instruction information, and the demodulating unit 56 demodulates the segmented data according to the rate instruction information. Thus, the demodulating unit 56 demodulates the data segment by segment based on the rate instruction information.

The data decoding unit 57 decodes the segmented data based on the rate instruction information included in the control information. Thus, the data decoding unit 57 decodes the data segment by segment based on the rate instruction information.

The error detecting unit 58 detects an error of data based on the CRC of the decoded data.

The uplink stream control information generating unit 59 generates uplink stream control information based on the control information decoded by the control information decoding unit 55.

The uplink stream transmission frame framing unit 60 generates a frame to be transmitted to the wireless base station 11. An RS, control information, and data are inputted to the uplink stream transmission frame framing unit 60, and an uplink stream transmission frame is generated.

The transmitting unit 61 converts the data outputted from the uplink stream transmission frame framing unit 60 to a wireless signal and wirelessly transmits the signal to the base station 11 through the antenna Tx.

Although only the wireless base station 11 segments and transmits the data in the description of FIGS. 5 and 7, the mobile terminal 12 can also segment and transmit the data. In that case, the scheduler 36 of the wireless base station 11 also determines the rate instruction information of the mobile terminal 12. As in the description of FIG. 6, the rate instruction information of the mobile terminal 12 is stored in the storage device, and the scheduler 36 determines the rate instruction information of the mobile terminal 12 with reference to the storage device. The wireless base station 11 inputs the determined rate instruction information of the mobile terminal 12 into the control information and transmits the information to the mobile terminal 12. The mobile terminal 12 segments the data based on the received rate instruction information, generates data in the frame format illustrated in FIG. 4, and wirelessly transmits the data to the wireless base station 11. Specifically, the uplink stream transmission frame framing unit 60 of FIG. 7 includes a data framing unit and a modulating unit similar to the data framing unit 37 and the modulating unit 38 of FIG. 5. The data framing unit and the modulating unit segment, encode, and modulate the data based on the rate instruction information included in the control information decoded by the control information decoding unit 55.

In this way, the wireless base station 11 and the mobile terminal 12 segment the data and make the transmission rate variable in each segmented data. This enables maintaining throughput even in a poor channel environment.

A second embodiment will now be described. In the first embodiment, the data is segmented, and the transmission rate of the segmented data is variable. In the second embodiment, the transmission power of the segmented data is variable.

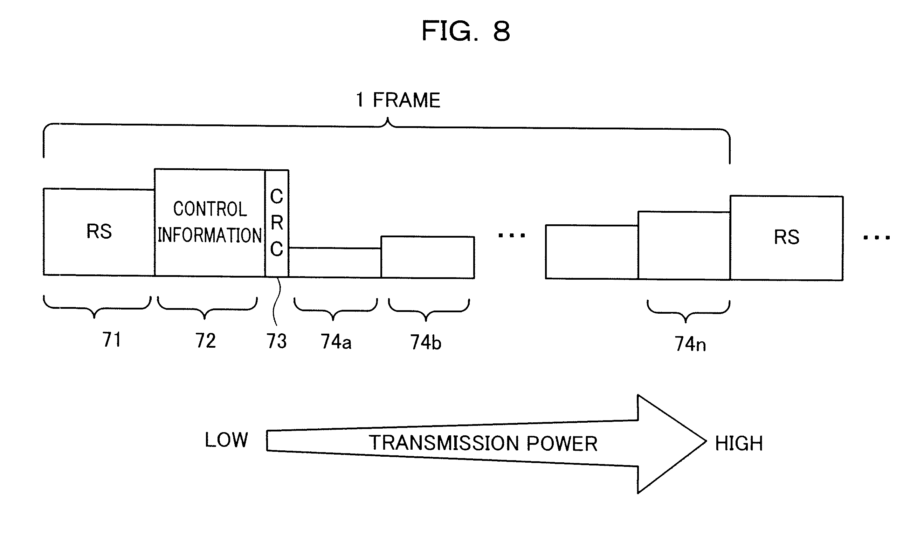

FIG. 8 is a diagram illustrating an example of a frame format according to the second embodiment. As illustrated in FIG. 8, an RS 71, control information 72, and a CRC 73 of the control information 72 are allocated to one frame. In a data area where data is allocated, one frame is divided into a plurality of segments 74a, 74b, ..., and 74n, and the data encoded in the unit of segments 74a, 74b, ..., and 74n and the CRC of the data (not illustrated) are allocated. The data allocated to the segments 74a, 74b, ..., and 74n is decoded in the unit of segments 74a, 74b, ..., and 74n.

In the segment 74a at a location near the RS 71, the difference between a channel estimation value obtained using the RS 71 and the actual channel estimation value in the segment 74a is small. Therefore, the decoding accuracy of data of the segment 74a is high, and data in low transmission power can be accurately decoded.

Meanwhile, in the segment 74n at a location far from the RS 71, the difference between a channel estimation value obtained using the RS 71 and the actual channel estimation value in the segment 74n is large. Therefore, the decoding accuracy of data of the segment 74a is low, and the data is transmitted in high transmission power to allow accurate decoding.

Making the transmission power of the segments 74a, 74b, ..., 74n variable according to the distance from the RS 71 enables maintaining throughput even in a poor channel environment.

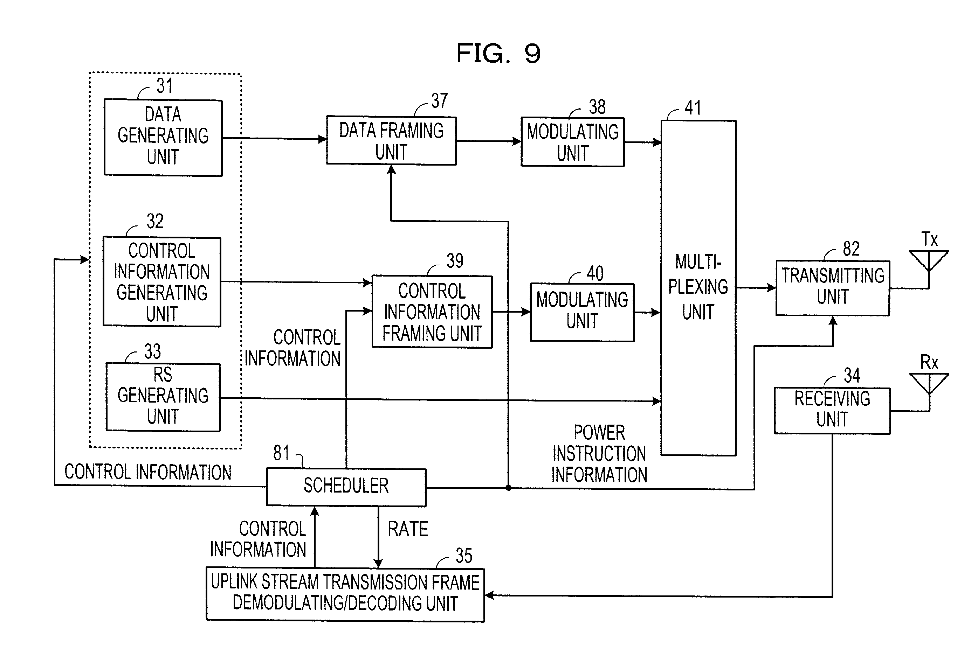

FIG. 9 is a block diagram of a configuration of the wireless base station. In FIG. 9, the same components as in FIG. 5 are designated with the same reference numerals, and the description will not be repeated.
The scheduler 81 determines power instruction information of data to be transmitted to the mobile terminal 12. The power instruction information is information indicating the transmission power of the segments 74a, 74b, ..., and 74n and is information of the transmission power, such as the segment 74a at 9 dB and the segment 74b at 10 dB.

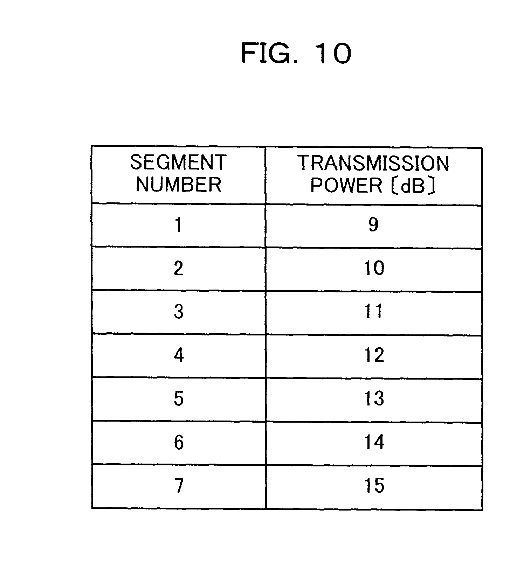

FIG. 10 is a diagram illustrating a data configuration example of the power instruction information. As illustrated in FIG. 10, the power instruction information includes a field of segment number and a field of transmission power.
The segment number corresponds to, for example, the segments 74a, 74b, ..., and 74n illustrated in FIG. 8. The smaller the segment number, the closer is the corresponding segment to the RS 21, and the larger the number, the farther is the corresponding segment to the RS 21. Therefore, the smaller the segment number, the lower is the transmission power, and the larger the segment number, the higher is the transmission power.

The power instruction information illustrated in FIG. 10 is stored in a storage device, and the scheduler 81 acquires the power instruction information from the storage device. There are a plurality of patterns in the power instruction information, and a plurality of pieces of information are stored in the storage device (storage unit).

FIG. 9 will be further described. The scheduler 81 refers to the storage device based on CQI information of the control information outputted from the uplink stream transmission frame demodulating/decoding unit 35 to acquire the power instruction information. Specifically, the scheduler 81 determines predetermined power instruction information according to the wireless quality, such as fading variation. The scheduler 81 outputs the determined power instruction information to the transmitting unit 82.

The power instruction information is inputted to the data framing unit 37 from the scheduler 81. The data framing unit 37 segments and encodes the data based on the segment numbers included in the power instruction information.

The power instruction information is inputted to the transmitting unit 82 from the scheduler 81. The transmitting unit 82 makes the power of data of the segments outputted from the multiplexing unit 41 variable based on the segment numbers and the transmission power included in the power instruction information.

Other processes of FIG. 9 are similar to those in FIG. 5. The power instruction information is not included in the downlink stream control information to be transmitted to the mobile terminal 12. This is because the mobile terminal 12 can perform decoding and demodulation without the power instruction information. The block configuration of the mobile terminal 12 is the same as in FIG. 7.

Although only the wireless base station 11 segments and transmits the data in the above description, the mobile terminal 12 can also segment and transmit the data. In that case, the scheduler 81 of the wireless base station 11 also determines the power instruction information of the mobile terminal 12. As in the description of FIG. 10, the power instruction information of the mobile terminal 12 is stored in the storage device, and the scheduler 81 determines the power instruction information of the mobile terminal 12 with reference to the storage device. The wireless base station 11 inputs the determined power instruction information of the mobile terminal 12 into the control information and transmits the information to the mobile terminal 12. The mobile terminal 12 segments the data based on the received power instruction information, generates data in the frame format illustrated in FIG. 8, and wirelessly transmits the data to the wireless base station 11.
Specifically, the uplink stream transmission frame framing unit 60 of FIG. 7 includes the same functions as the data framing unit 37 of FIG. 9

and segments and encodes the data based on the power instruction information included in the control information decoded by the control information decoding unit 55.

The transmitting unit 61 includes the same functions as the transmitting unit 82 of FIG. 9 and makes the transmission power of the segmented data variable based on the power instruction information included in the control information decoded by the control information decoding unit 55.

In this way, the wireless base station 11 and the mobile terminal 12 segment the data and make the transmission power variable in each segmented data. This enables maintaining throughput even in a poor channel environment.

A third embodiment will now be described. In the first embodiment, the transmission rate of the segmented data can be varied so that the transmission rate becomes low. In the third embodiment, the transmission rate of the segmented data can be varied so that the transmission rate becomes high. A pseudo RS will be described first.

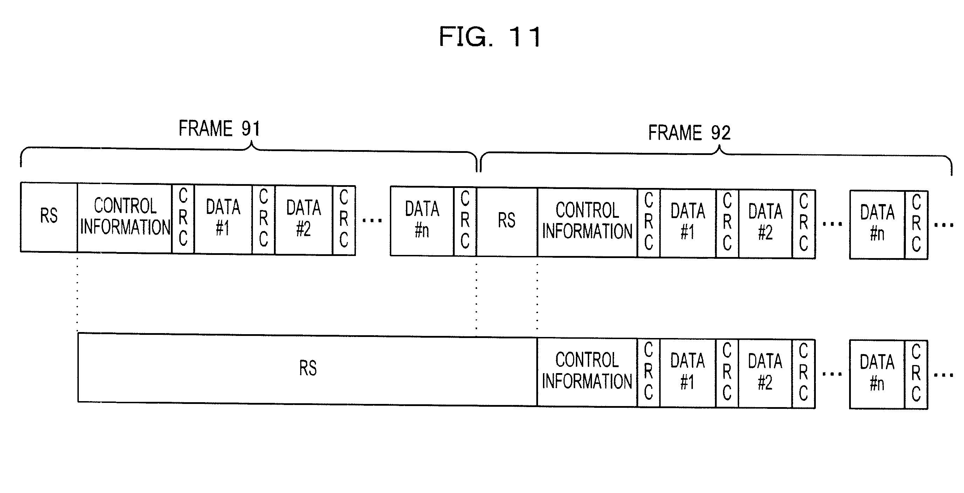

FIG. 11 is a diagram for explaining the pseudo RS. FIG. 11 illustrates frames 91 and 92. The frame 92 follows the frame 91.

The data of the frame 91 is already known when the wireless base station 11 or the mobile terminal 12 receives the frame 92 from a partner apparatus. Therefore, the wireless base station 11 or the mobile terminal 12 can artificially use part or all of the control information and data of the frame 91 as an RS of the frame 92.

For example, the wireless base station 11 or the mobile terminal 12 uses not only the RS of the frame 92, but also the known control information and the data of the frame 91, as a pseudo RS to perform the channel estimation of the frame 92.

In this way, the known data or the like of the previously received frame is used as a pseudo RS to artificially extend the width of the RS, thereby preventing the degradation of the channel estimation.

Meanwhile, in the pseudo RS, if there is an error in the control information or in decoding of data, the control information and the data may not be used as a pseudo RS. In this case, the width of the pseudo RS is shortened, and the channel estimation is degraded.

Thus, the closer to the RS, the lower is the transmission rate set, thereby reducing the errors caused by decoding of data, and extending the width of the pseudo RS.

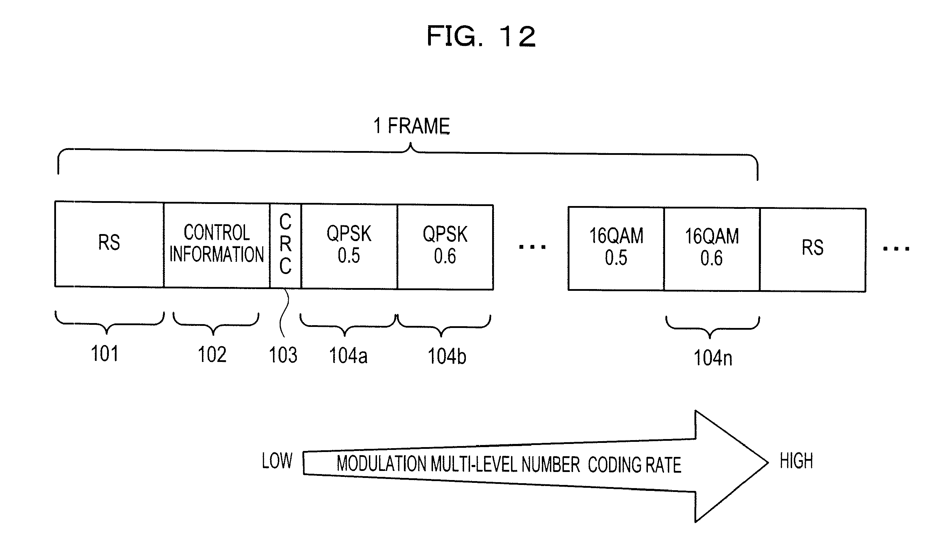

FIG. 12 is a diagram illustrating an example of a frame format according to a third embodiment. As illustrated in FIG. 12, an RS 101, control information 102, and a CRC 103 of the control information 102 are allocated to one frame. In a data area where data is allocated, one frame is divided into a plurality of segments 104a, 104b, ..., and 104n, and the data encoded in the unit of segments 104a, 104b, ..., and 104n and the CRC of the data (not illustrated) are allocated. The data allocated to the segments 104a, 104b, ..., and 104n is decoded in the unit of segments 104a, 104b, ..., and 104n.

In the segment 104a at a location near the RS 101, the transmission rate is set low so that reliable encoding is performed without error. The transmission rate is set high with increasing distance from the RS 101.

In the example of FIG. 12, the modulation scheme of the segment 104a closest to the RS 101 is QPSK, and the coding rate is 0.5. The modulation scheme of the segment 104n farthest from the RS 101 is 16QAM, and the coding rate is 0.6.

In this way, the data of the segment near the RS 101 is reliably decoded by reducing the transmission rate of the segment near the RS 101. This enables reliably extending the width of the pseudo RS even in a poor channel environment, thereby preventing the degradation of the channel estimation and maintaining throughput.

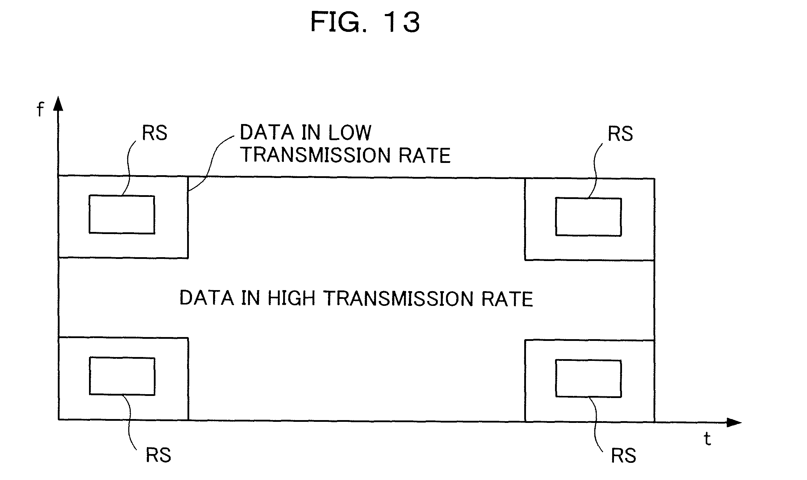

FIG. 13 is a diagram illustrating FIG. 12 with time-frequency axes. The horizontal axis of FIG. 13 denotes time, and the vertical axis denotes frequency.

As illustrated in FIG. 13, the transmission rate of the data of the segment near the RS is low. The transmission rate of the data of the segment at the location far from the RS (central part of data in high transmission rate in FIG. 13) is high. If there is no error in decoding of nearby data, the range of the areas of the RS illustrated in FIG. 13 spreads to the central part of the data in high transmission rate based on the pseudo RS. This enables preventing the degradation of the channel estimation of the part of the data in high transmission rate illustrated in FIG. 13.

The block configuration of the wireless base station 11 is similar to that in FIG. 5. However, the content of the rate instruction information is different.

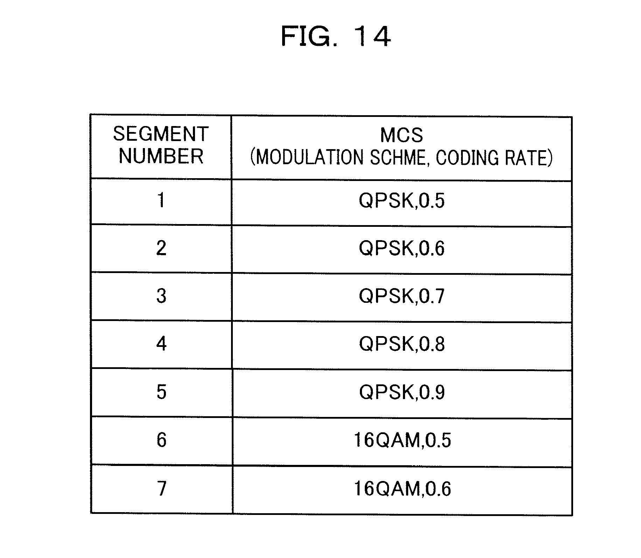

FIG. 14 is a diagram illustrating a data configuration example of the rate instruction information. As illustrated in FIG. 14, the rate instruction information includes a field of segment number and a field of MCS.

The segment number corresponds to, for example, the segments 104a, 104b, ..., and 104n illustrated in FIG. 12. The smaller the segment number, the closer is the corresponding segment to the RS 101, and the larger the number, the farther is the corresponding segment to the RS 101. Therefore, the smaller the segment number, the lower is the transmission rate, and the larger the segment number, the higher is the transmission rate.

The rate instruction information illustrated in FIG. 14 is stored in a storage device, and the scheduler 36 acquires the rate instruction information from the storage device. There are a plurality of patterns in the rate instruction information, and a plurality of pieces of information are stored in the storage device.

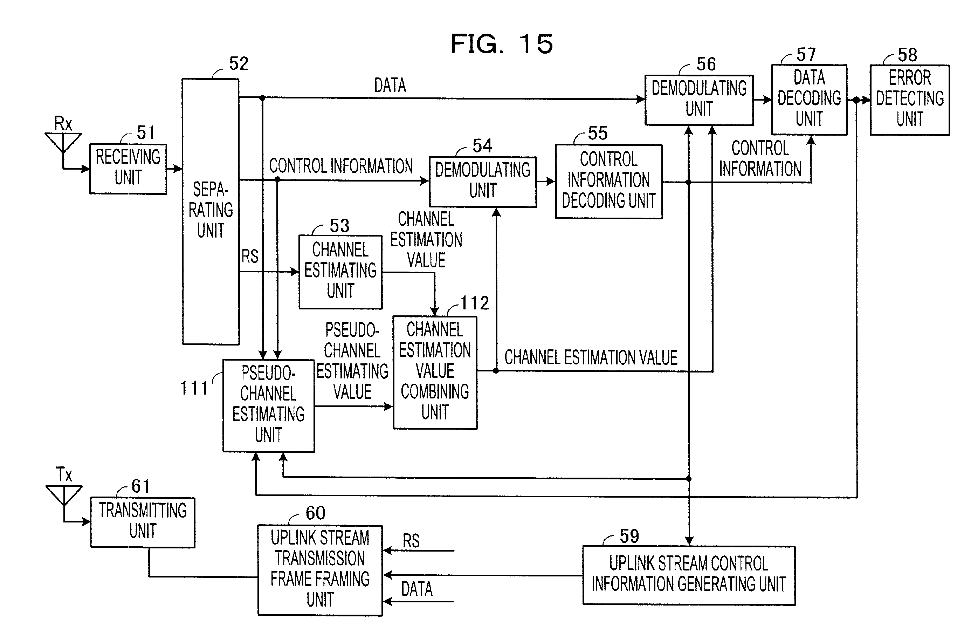

FIG. 15 is a block diagram of a configuration of the mobile terminal. In FIG. 15, the same components as in FIG. 7 are designated with the same reference numerals, and the description will not be repeated.

As illustrated in FIG. 15, the mobile terminal 12 includes a pseudo-channel estimating unit 111 and a channel estimation value combining unit 112. The pseudo-channel estimating unit 111 sets the decoded control information and the data as a pseudo RS to calculate a pseudo-channel estimation value.

The channel estimation value combining unit 112 combines the channel estimation value calculated by the channel estimating unit 53 and the pseudo-channel estimation value calculated by the pseudo-channel estimating unit 111 to calculate a channel estimation value.

The channel estimating unit 53 calculates the channel estimation value based on the RS of the currently receiving frame. The pseudo-channel estimating unit 111 calculates the pseudo-channel estimation value based on the already known control information and data of the previous frame. For example, the channel estimating unit 53 uses the RS of the frame 92 illustrated in FIG. 11 to calculate the channel estimation value. The pseudo-channel estimating unit 111 uses the control information and the data of the frame 91 to calculate the pseudo-channel estimation value.

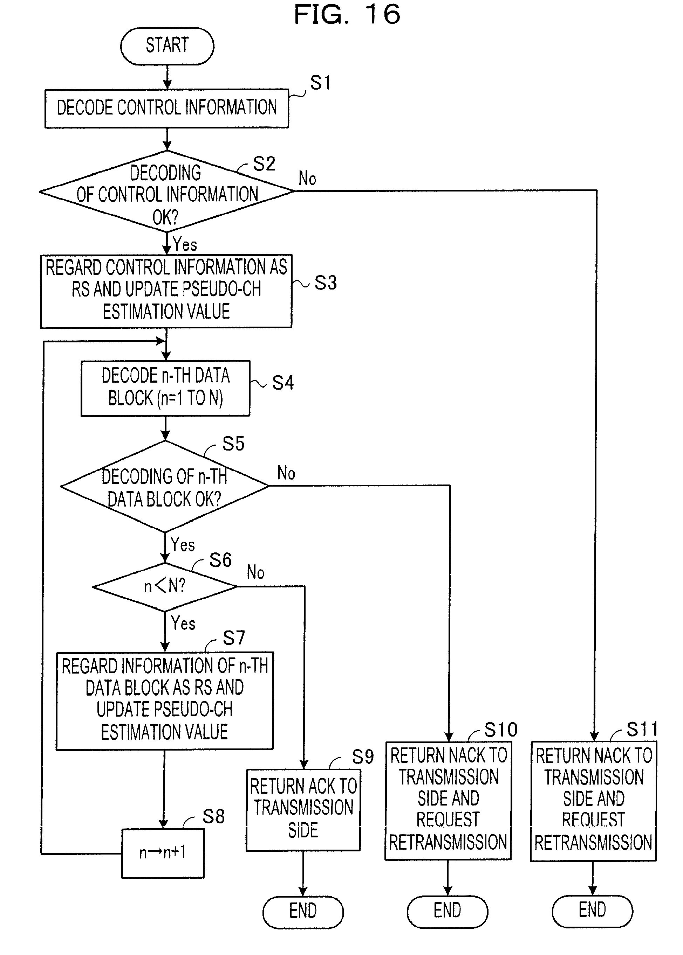

FIG. 16 is a flow chart of a pseudo RS process of the mobile terminal. The mobile terminal 12 calculates the channel estimation value according to the following steps.
In step S1, the mobile terminal 12 decodes the control information.

In step S2, the mobile terminal 12 determines whether decoding of the control information has been performed without error. If the decoding has been performed without error, the process proceeds to step S3. If there is an error in decoding, the process proceeds to step S11.

In step S3, the mobile terminal 12 regards the control information of the frame as an RS and updates the pseudo-channel estimation value.
In step S4, the mobile terminal 12 decodes the n-th data of frame (n: positive integer between 1 to N, N: the number of segments).

In step S5, the mobile terminal 12 determines whether the n-th data block has been decoded without error. If the decoding has been performed without error, the process proceeds to step S6. If there is an error in decoding, the process proceeds to step S10.

In step S6, the mobile terminal 12 compares the values of n and N. If the value of n is smaller than N, the process proceeds to step S7. If the value of n is equal to or greater than N, the process proceeds to step S9.
In step S7, the mobile terminal 12 also regards the information of the n-th data block as the RS and updates the pseudo-channel estimation value. The channel estimation value combining unit 112 combines the pseudo-channel estimation value with the channel estimation value calculated by the channel estimating unit 53.

In step S8, the mobile terminal 12 adds 1 to the value of n, and the process proceeds to step S4.
In step S9, the mobile terminal 12 returns the ACK to the transmission side (wireless base station 11).
In step S10, the mobile terminal 12 returns the NACK to the transmission side and requests retransmission of data.

In step S11, the mobile terminal 12 returns the NACK to the transmission side and requests retransmission of data.
In this way, reducing the transmission rate of the segment near the RS and reliably decoding the data of the segment near the RS enable reliably extending the width of the pseudo RS, thereby preventing the degradation of the channel estimation and maintaining throughput.

The wireless base station 11 may also include the pseudo RS. In that case, the uplink stream transmission frame demodulating/decoding unit 35 illustrated in FIG. 5 includes the channel estimating unit 53, the pseudo-channel estimating unit 111, and the channel estimation value combining unit 112 of FIG. 15. The uplink stream transmission frame demodulating/decoding unit 35 calculates the pseudo-channel estimation value from the received control information and data and demodulates and decodes the data.

A fourth embodiment will now be described. In the third embodiment, the transmission rate of the segmented data can be varied so that the transmission rate becomes high. In the fourth embodiment, the transmission power of the segmented data can be varied so that the transmission power becomes low.

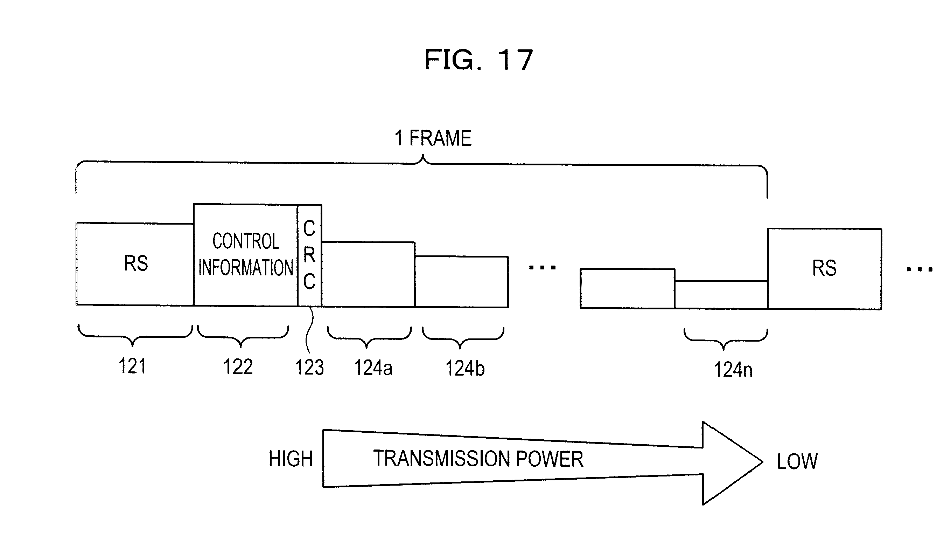

FIG. 17 is a diagram illustrating an example of a frame format according to the fourth embodiment. As illustrated in FIG. 17, an RS 121, control information 122, and a CRC 123 of the control information 122 are allocated to one frame. In a data area where data is allocated, one frame is divided into a plurality of segments 124a, 124b, ..., and 124n, and the data encoded in the unit of segments 124a, 124b, ..., and 124n and the CRC of the data are allocated. The data allocated to the segments 124a, 124b, ..., and 124n is decoded in the unit of segments 124a, 124b, ..., and 124n.

In the segment 124a at a location near the RS 121, the transmission power is set high so that reliable encoding is performed without error. The transmission power is set low with increasing distance from the RS 121.

In this way, the data of the segment near the RS 121 is reliably decoded by increasing the transmission power of the segment near the RS 121. This enables reliably extending the width of the pseudo RS even in the worst channel environment, thereby preventing the degradation of the channel estimation.

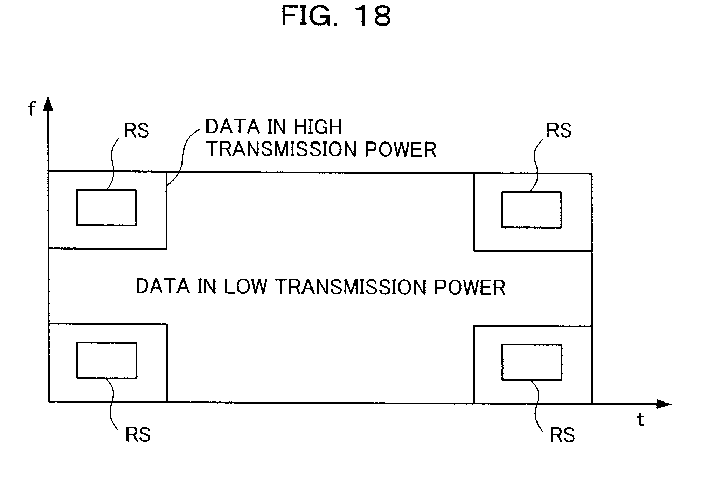

FIG. 18 is a diagram illustrating FIG. 17 with time-frequency axes. The horizontal axis of FIG. 18 denotes time, and the vertical axis denotes frequency. As illustrated in FIG. 18, the transmission power of the data of the segment near the RS is high. The transmission power of the data of the segment at a location far from the RS (central part of data in low transmission power in FIG. 18) is low. If there is no error in decoding of nearby data, the range of the areas of the RS illustrated in FIG. 18 spreads to the central part of the data in low transmission power based on the pseudo RS. This enables preventing the degradation of the channel estimation of the part of the data in low transmission power illustrated in FIG. 18.

The block configuration of the wireless base station 11 is similar to that in FIG. 9. However, the content of the power instruction information is different.

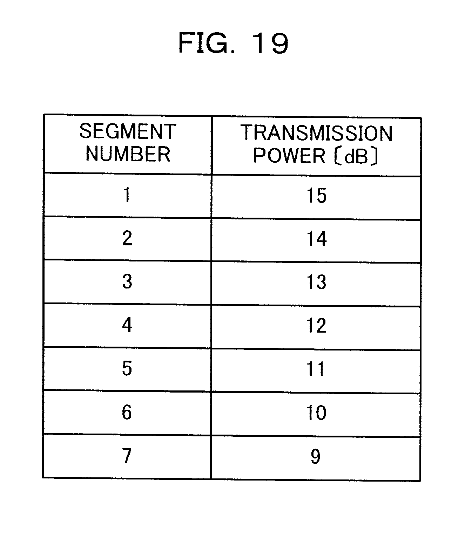

FIG. 19 is a diagram illustrating a data configuration example of the power instruction information. As illustrated in FIG. 19, the power instruction information includes a field of segment number and a field of transmission power.

The segment number corresponds to, for example, the segments 124a, 124b, ..., and 124n illustrated in FIG. 17. The smaller the segment number, the closer is the corresponding segment to the RS 121, and the larger the number, the farther is the corresponding segment to the RS 121. Therefore, the smaller the segment number, the higher is the transmission power, and the larger the segment number, the lower is the transmission rate.

The power instruction information illustrated in FIG. 19 is stored in a storage device, and the scheduler 81 acquires the power instruction information from the storage device. There are a plurality of patterns in the power instruction information, and a plurality of pieces of information are stored in the storage device. The configuration of the mobile terminal 12 is the same as in FIG. 15.

In this way, increasing the transmission power of the segment near the RS and reliably decoding the data of the segment near the RS enable reliably extending the width of the pseudo RS, thereby preventing the degradation of the channel estimation.

The wireless base station 11 may also include the pseudo RS. In that case, the uplink stream transmission frame demodulating/decoding unit 35 illustrated in FIG. 5 includes the channel estimating unit 53, the pseudo-channel estimating unit 111, and the channel estimation value combining unit 112 of FIG. 15. The uplink stream transmission frame demodulating/decoding unit 35 calculates the pseudo-channel estimation value from the received control information and data and demodulates and decodes the data.

A fifth embodiment will now be described. In the fifth embodiment, the number of segments can be varied according to the wireless quality. For example, the number of the segments 24a, 24b, ..., and 24n illustrated in FIG. 3 can be varied.

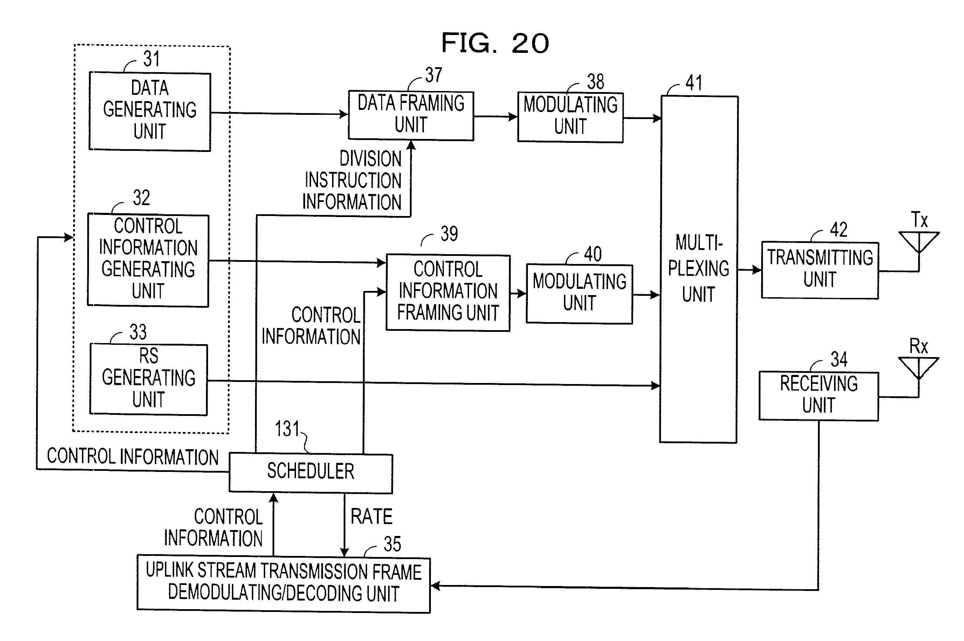

FIG. 20 is a block diagram of a configuration of the wireless base station according to the fifth embodiment. In FIG. 20, the same components as in FIG. 5 are designated with the same reference numerals, and the description will not be repeated.
A scheduler 131 outputs division instruction information to the data framing unit 37, the information including the number of segments to which data will be allocated. The data framing unit 37 divides the data into a predetermined number of pieces based on the number of segments of the division instruction information and encodes the data.

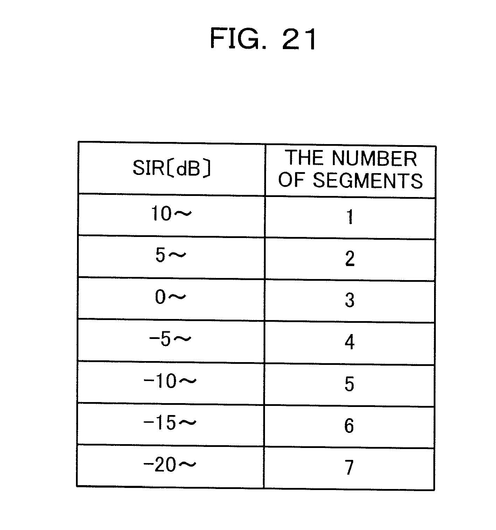

FIG. 21 is a diagram illustrating a data configuration example of the division instruction information. As illustrated in FIG. 21, the division instruction information includes a field of SIR (Signal to Interference Ratio) and a field of the number of segments. The number of segments increases as the value of the SIR decreases. The division instruction information is stored in a storage device.

FIG. 20 will be further described. The scheduler 131 acquires the division instruction information from the storage device based on the wireless quality such as the SIR. The SIR is included in the CQI information from the uplink stream transmission frame demodulating/decoding unit 35. The scheduler 131 outputs the division instruction information acquired based on the SIR to the data framing unit 37. The scheduler 131 also outputs the acquired division instruction information to the control information framing unit 39 as control information.

The mobile terminal 12 is the same as in FIG. 7. However, the demodulating unit 56 and the data decoding unit 57 demodulate and decode the segmented data segment by segment based on the division instruction information included in the control information.

The mobile terminal 12 can also make the number of segments of the data variable. In that case, the scheduler 131 of the wireless base station 11 also determines the division instruction information of the mobile terminal 12. The division instruction information of the mobile terminal 12 is stored in the storage device, and the scheduler refers to the storage device to determine the division instruction information of the mobile terminal 12. The wireless base station 11 inputs the determined division instruction information of the mobile terminal 12 into the control information and transmits the information to the mobile terminal 12. The mobile terminal 12 segments the data based on the division instruction information included in the received control information and wirelessly transmits the data to the wireless base station 11.

In this way, making the number of segments variable enables improving the channel estimation accuracy by increasing the number of segments in a poor propagation channel environment. In a favorable propagation channel environment, the number of segments is decreased to reduce the CRC bits, thereby ensuring throughput.

The fifth embodiment can also be applied to the first to fourth embodiments. Thus, the transmission rate and the transmission power can be varied, and the number of segments can also be varied.

A sixth embodiment will now be described. In the sixth embodiment, the coding rate is calculated by formulas.

In the sixth embodiment, the wireless base station 11 and the mobile terminal 12 include a block configuration similar to that in the first and third embodiments. However, the wireless base station 11 includes an AMC (Auto Modulation Control) and a transmission rate calculating unit.

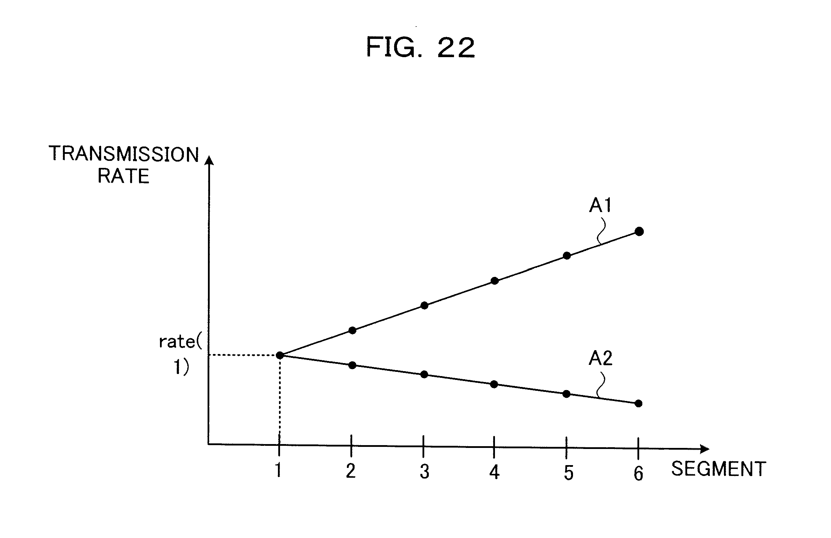

FIG. 22 is a diagram illustrating a relationship between the segments and the transmission rate. The horizontal axis of FIG. 22 denotes numbers indicating locations of the segments. For example, the segments 24a and 24b of FIG. 3 correspond to 1 and 2 on the horizontal axis of FIG. 22. The vertical axis denotes the transmission rate.

A straight line A1 of FIG. 22 illustrates an example in which the transmission rate becomes higher with increasing distance from the RS to the location of the segment. A straight line A2 illustrates an example in which the transmission rate becomes lower with increasing distance from the RS to the location of the segment. In FIG. 22, rate(1) denotes the transmission rate of the leading segment determined by the AMC.

The calculation of the slopes of the straight lines A1 and A2 of the transmission rate calculating unit will be described. The number of bits of the data to be transmitted is the same as when the coding rate is not changed (normal data transmission). The coding rate in the n-th segment is defined as rate(n). The slope to be calculated is defined as r, the number of bits per segment is defined as T, the coding rate is defined as r0, and the number of segments is defined as N.

The following formula (1) is established to conform the transmission bits to the transmission bits during the normal data transmission.

$$\sum_{n=1}^{N} T \cdot \mathrm{rate}(n) = N \cdot T \cdot r0 \quad \cdots (1)$$

The following formula (2) is established to change the coding rate according to the slopes of the straight lines A1 and A2.

$$\mathrm{rate}(n) = \mathrm{rate}(1) + r \cdot (n-1) \quad \cdots (2)$$

The slope r is obtained by assigning formula (2) to formula (1).

$$r = \frac{2 \cdot \{ r0 - \mathrm{rate}(1) \}}{N-1} \quad \cdots (3)$$

The scheduler 36 informs the transmission rate calculated by the transmission rate calculating unit to the data framing unit 37 and the modulating unit 38. As a result, the coding rate can be determined segment by segment.

Although the coding rate is changed only in the time direction in the description above, the same can also be obtained in the frequency direction. Two dimensional expansion of time and frequency is also possible.

In this way, the transmission rate of segment can be determined by calculating the transmission rate by computation.

Although the transmission rate and the transmission power are variable in each segment in the first to sixth embodiments, the number of times of code multiplexing may also be variable in each segment in the CDMA system. Code sequences orthogonal to each other are prepared for each user in the CDMA system. After normal demodulation, the spreading codes are multiplied, and the pieces of the user data are combined. On the receiving side, multiplying (dispreading) the spreading codes that are independent for each user enables extracting data user by user. The number of times of multiplexing of users is called a number of times of code multiplexing.

In the disclosed apparatus, throughput can be maintained even in a poor channel environment.

In any of the above aspects, the various features may be implemented in hardware, or as software modules running on one or processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to an illustration of the superiority and inferiority of the invention. Although the embodiment(s) of the present inventions have been described in detail, it should be understood that various changes, substitutions, and alterations could be made hereto without departing from the spirit and scope of the invention.

**Claims**

1. A wireless communication apparatus that transmits a wireless signal, the wireless communication apparatus comprising:

   a dividing unit that divides data transmitted in a data area of a frame format of the wireless signal into a plurality of segments; and
   an encoding unit that encodes the data segmented by the dividing unit segment by segment.

2. The wireless communication apparatus according to claim 1, further comprising a transmission rate variable unit varying a transmission rate of the encoded data segment by segment according to a distance from a reference signal of the frame format.

3. The wireless communication apparatus according to claim 2, wherein
   the transmission rate variable unit varies the transmission rate by changing a coding rate of the encoding unit or a modulation scheme of the segmented data.

4. The wireless communication apparatus according to claim 2, wherein
   the transmission rate variable unit reduces the transmission rate of the segmented data as the distance from the reference signal of the frame format increases and increases the transmission rate as the distance from the reference signal of the frame format increases.

5. The wireless communication apparatus according to claim 1, further comprising
   a transmission power variable unit varying a transmission power of the encoded data segment by segment according to a distance from the reference signal of the frame format.

6. The wireless communication apparatus according to claim 5, wherein
   the transmission power variable unit increases the transmission power of the segmented data as the distance from the reference signal of the frame format increases and reduces the transmission power as the distance from the reference signal of the frame format increases.

7. The wireless communication apparatus according to any preceding claim, wherein
   the dividing unit varies a number of segments according to wireless quality.

8. The wireless communication apparatus according to any preceding claim, further comprising a control information transmitting unit that transmits, from a control information area of the frame format, control information related to the segments and decoding.

9. The wireless communication apparatus according to any preceding claim, further comprising a coding rate calculating unit that calculates a coding rate of the segmented data based on predetermined formulas.

10. A wireless communication apparatus that receives a wireless signal, the wireless communication apparatus comprising:

    a receiving unit that receives the wireless signal in a frame format in which data of a data area is divided into a plurality of segments; and

a decoding unit that decodes the data of the wireless signal received by the receiving unit segment by segment.

11. The wireless communication apparatus according to claim 10, wherein
the decoding unit decodes the data in order from a segment closer to a reference signal of the frame format and uses a decoding result as the reference signal to decode the data.

12. The wireless communication apparatus according to claim 10 or 11, wherein
a transmission rate of the segmented data is variable according to a distance from a reference signal of the frame format.

13. The wireless communication apparatus according to claim 10, 11 or 12, wherein
a transmission power of the segmented data is variable according to a distance from a reference signal of the frame format.

14. A wireless transmission method of a wireless communication apparatus that transmits a wireless signal, the wireless transmission method comprising:

dividing data transmitted in a data area of a frame format of the wireless signal into a plurality of segments; and

encoding the segmented data segment by segment.

15. A wireless reception method of a wireless communication apparatus that receives a wireless signal, the wireless reception method comprising:

receiving the wireless signal in a frame format in which data of a data area is divided into a plurality of segments; and

decoding the data of the received wireless signal segment by segment.

# FIG. 1

1 WIRELESS COMMUNICATION APPARATUS

1a
DIVIDING UNIT

1b
ENCODING UNIT

3

| RS | CONTROL INFORMATION | DATA | DATA | · · · | DATA |
|----|---------------------|------|------|-------|------|

3a   3b   3n

2 WIRELESS COMMUNICATION APPARATUS

2a
RECEIVING UNIT

2b
DECODING UNIT

EP 2 104 258 A2

# FIG. 2

WIRELESS
BASE
STATION

11

12

# FIG. 3

1 FRAME

| RS | CONTROL INFORMATION | C R C | DATA #1 | C R C | DATA #2 | C R C | ··· | DATA #n | C R C | RS | ··· |

21    22    23    24a    24b    24n

# FIG. 4

EP 2 104 258 A2

1 FRAME

| RS | CONTROL INFORMATION | C R C | 16QAM 0.6 | 16QAM 0.5 | ... | QPSK 0.6 | QPSK 0.5 | RS | ... |

21     22     23    24a     24b         24n

HIGH | MODULATION MULTI-LEVEL NUMBER  CODING RATE | LOW

# FIG. 5

11

EP 2 104 258 A2

# FIG. 6

| SEGMENT NUMBER | MCS (MODULATION SCHME, CODING RATE) |
|---|---|
| 1 | 16QAM,0.6 |
| 2 | 16QAM,0.5 |
| 3 | QPSK,0.9 |
| 4 | QPSK,0.8 |
| 5 | QPSK,0.7 |
| 6 | QPSK,0.6 |
| 7 | QPSK,0.5 |

EP 2 104 258 A2

# FIG. 7

EP 2 104 258 A2

# FIG. 8

1 FRAME

RS | CONTROL INFORMATION | C R C | | | ... | | | RS | ...

71    72    73    74a    74b    74n

LOW    TRANSMISSION POWER    HIGH

EP 2 104 258 A2

# FIG. 9

EP 2 104 258 A2

FIG. 10

| SEGMENT NUMBER | TRANSMISSION POWER [dB] |
|:---:|:---:|
| 1 | 9 |
| 2 | 10 |
| 3 | 11 |
| 4 | 12 |
| 5 | 13 |
| 6 | 14 |
| 7 | 15 |

EP 2 104 258 A2

FIG. 11

# FIG. 12

1 FRAME

| RS | CONTROL INFORMATION | C R C | QPSK 0.5 | QPSK 0.6 | ··· | 16QAM 0.5 | 16QAM 0.6 | RS | ··· |

101  102  103  104a  104b  104n

LOW  MODULATION MULTI-LEVEL NUMBER  CODING RATE  HIGH

# FIG. 13

f

RS    DATA IN LOW
      TRANSMISSION RATE                    RS

DATA IN HIGH TRANSMISSION RATE

RS                                          RS    t

EP 2 104 258 A2

# FIG. 14

| SEGMENT<br>NUMBER | MCS<br>(MODULATION SCHME, CODING RATE) |
|---|---|
| 1 | QPSK,0.5 |
| 2 | QPSK,0.6 |
| 3 | QPSK,0.7 |
| 4 | QPSK,0.8 |
| 5 | QPSK,0.9 |
| 6 | 16QAM,0.5 |
| 7 | 16QAM,0.6 |

EP 2 104 258 A2

FIG. 15

# FIG. 16

```
           ( START )
               │
               ▼
  ┌──────────────────────────┐ ～S1
  │  DECODE CONTROL INFORMATION │
  └──────────────────────────┘
               │
               ▼
         ╱ DECODING ╲  S2    No
        ╱ OF CONTROL  ╲──────────────────────────────┐
        ╲ INFORMATION ╱                               │
         ╲   OK?     ╱                                │
              │Yes                                    │
              ▼                                       │
  ┌──────────────────────────┐                        │
  │  REGARD CONTROL INFORMATION AS │ ～S3               │
  │  RS AND UPDATE PSEUDO-CH   │                        │
  │  ESTIMATION VALUE          │                        │
  └──────────────────────────┘                        │
              │                                        │
     ┌────────▼─────────┐                              │
     │                  ▼                              │
     │   ┌──────────────────────┐ ～S4                 │
     │   │  DECODE n-TH DATA     │                     │
     │   │  BLOCK (n=1 TO N)     │                     │
     │   └──────────────────────┘                     │
     │              │                                  │
     │              ▼                                  │
     │        ╱ DECODING ╲ S5    No                    │
     │       ╱ OF n-TH    ╲────────────────┐           │
     │       ╲ DATA BLOCK OK?╱              │           │
     │         ╲         ╱                 │           │
     │              │Yes                   │           │
     │              ▼  S6      No          │           │
     │          ╱ n<N? ╲──────────┐        │           │
     │           ╲     ╱          │        │           │
     │              │Yes          │        │           │
     │              ▼  S7         │        │           │
     │   ┌──────────────────────┐ │        │           │
     │   │ REGARD INFORMATION OF n-TH │     │           │
     │   │ DATA BLOCK AS RS AND   │  │      │           │
     │   │ UPDATE PSEUDO-CH       │  │      │           │
     │   │ ESTIMATION VALUE       │  │      │           │
     │   └──────────────────────┘  │      │           │
     │              │              │      ▼           ▼
     │              ▼         ┌──────────┐ ┌──────────┐ ┌──────────┐
     │         ┌───────┐     │ S9       │ │ S10      │ │ S11      │
     │         │ n→n+1 │ S8  │RETURN ACK│ │RETURN NACK│ │RETURN NACK│
     │         └───────┘     │ TO       │ │TO         │ │TO         │
     └─────────────┘         │TRANSMISSION│ │TRANSMISSION│ │TRANSMISSION│
                             │ SIDE     │ │SIDE AND   │ │SIDE AND   │
                             └──────────┘ │REQUEST    │ │REQUEST    │
                                  │       │RETRANSMISSION│RETRANSMISSION│
                                  ▼       └──────────┘ └──────────┘
                               ( END )        │             │
                                              ▼             ▼
                                           ( END )       ( END )
```

# FIG. 17

1 FRAME

| RS | CONTROL INFORMATION | C R C | | | ... | | RS | ...

121 122 123 124a 124b 124n

HIGH ← TRANSMISSION POWER → LOW

EP 2 104 258 A2

# FIG. 18

RS

DATA IN HIGH TRANSMISSION POWER

RS

DATA IN LOW TRANSMISSION POWER

RS

RS

EP 2 104 258 A2

# FIG. 19

| SEGMENT NUMBER | TRANSMISSION POWER [dB] |
|:---:|:---:|
| 1 | 15 |
| 2 | 14 |
| 3 | 13 |
| 4 | 12 |
| 5 | 11 |
| 6 | 10 |
| 7 | 9 |

EP 2 104 258 A2

# FIG. 20

EP 2 104 258 A2

# FIG. 21

| SIR[dB] | THE NUMBER OF SEGMENTS |
|---|---|
| 10~ | 1 |
| 5~ | 2 |
| 0~ | 3 |
| -5~ | 4 |
| -10~ | 5 |
| -15~ | 6 |
| -20~ | 7 |

EP 2 104 258 A2

FIG. 22

EP 2 104 258 A2

**EP 2 104 258 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003115783 A